Europäisches Patentamt

European Patent Office

Office européen des brevets

(11) Publication number: **0 475 252 A1**

## EUROPEAN PATENT APPLICATION

(21) Application number: **91114857.5**

(22) Date of filing: **03.09.91**

(51) Int. Cl.⁵: **F22B 37/32**, B01D 45/08,
B01D 45/12, B01D 53/26,
B04C 5/04, B04C 5/02,
B04C 5/081

(30) Priority: **13.09.90 JP 95505/90 U**
**25.07.91 JP 186318/90**
**06.08.91 JP 196535/90**

(43) Date of publication of application:
**18.03.92 Bulletin 92/12**

(84) Designated Contracting States:
**FR GB GR IT**

(71) Applicant: **MITSUBISHI JUKOGYO KABUSHIKI KAISHA**
**5-1, Marunouchi 2-chome Chiyoda-ku Tokyo(JP)**

(72) Inventor: **Kuragasaki, Mutsuo c/o Nagasaki Techn. Inst. of**
**Mitsubishi Jukogyo Kabushiki Kaisha, 1-1, Akunoura**
**-machi, Nagasaki-shi, Nagasaki-ken(JP)**
Inventor: **Taniguchi, Masaaki c/o Nagasaki Techn. Inst. of**
**Mitsubishi Jukogyo Kabushiki Kaisha, 1-1 Akunoura-**
**machi, Nagasaki-shi, Nagasaki-ken,(JP)**
Inventor: **Tazaki,Shunsei,c/o Nagasaki Shipyard and Engine**
**Works of Mitsubishi Jukogyo K.K.,1-1,Akunouramachi**
**Nagasaki-shi, Nagasaki-ken(JP)**

(74) Representative: **Henkel, Feiler, Hänzel & Partner**
**Möhlstrasse 37**
**W-8000 München 80(DE)**

(54) **Gas-liquid separator.**

(57) An improved cylinder-shaped vertical type gas-liquid separator is disclosed. An inflow nozzle having a particular shape is mounted to a cylindrical body along its tangential direction. the cross-section area of the inflow nozzle is not decreased from its inlet along the inflow direction of a gas-liquid two-phase flow. The bottom surface of the inflow nozzle is inclined so as to be lowered along the flow direction at an inclination angle in the range of 30 degrees or less. The width of the inflow nozzle is held equal or gradually narrowed along the flow direction of the two-phase flow. The width at the spouting end of the inflow nozzle is narrower than the width of an annular circling flow path formed between the cylindrical body and a gas discharge pipe provided at the central portion of the cylindrical body. Preferably, in inflow nozzle is extended into the cylindrical body. More preferably, the inclination angle of the bottom surface of the inflow nozzle is chosen at 10° - 15°. Also, more preferably, the length of the inclined portion of the bottom surface of the inflow nozzle is chosen to be equal to about three times or more of an inlet pipe diameter.

BACKGROUND OF THE INVENTION:

Field of the Invention:

The present invention relates to a gas-liquid separator, which is applicable to a steam purity improving apparatus for use in a geothermal turbine, a gas-liquid separating apparatus for a gas-liquid two-phase flow in various kinds of plants, and the like.

Description of the Prior Art:

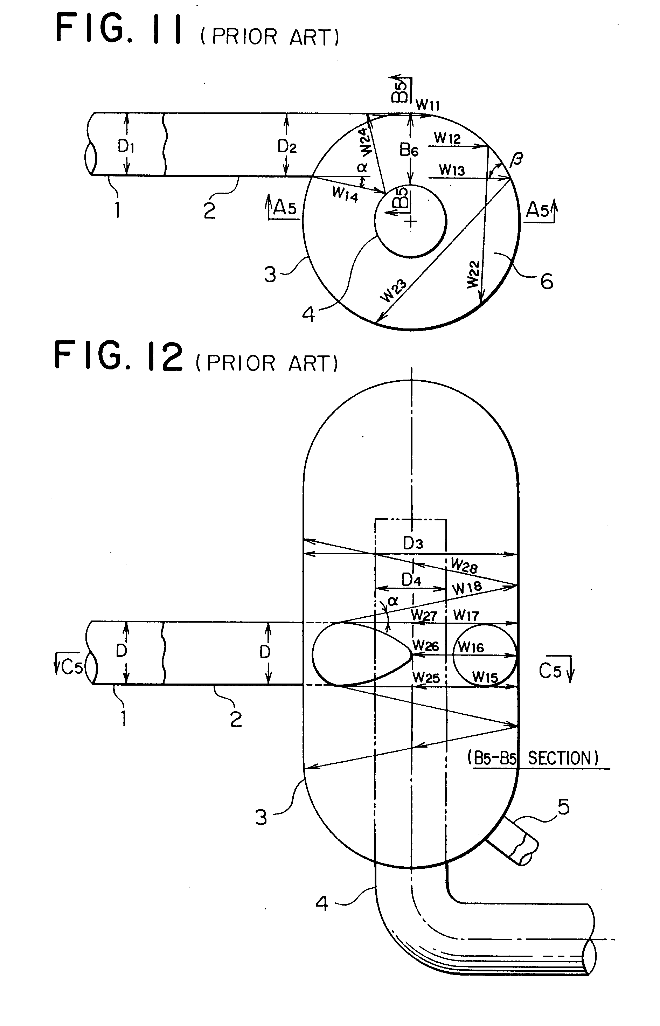

In a heretofore known gas-liquid separator, as shown in Figs. 11 and 12, an inlet pipe 1 for leading gas-liquid mixture fluid to the separator is connected to a cylindrical body 3 of a separator main body along its tangential direction as an inflow nozzle 2 with its configuration held intact, and its nozzle width (nozzle diameter $D_2$) is nearly equal in size to a width of an annular circling flow path 6 formed between the cylindrical body 3 and a gas discharge pipe 4 concentrically disposed within the same cylindrical body, in some cases the former is somewhat smaller than the latter, or in other cases the former is somewhat larger than the latter.

In this known gas-liquid separator, among a gas-liquid two-phase flow having flowed from the inlet pipe 1 through the inflow nozzle 2 into the annular circling flow path 6 in the cylindrical body 3, liquid drops will collide against and adhere to the peripheral wall of the cylindrical body due to an inertial force and a centrifugal force, and thereafter the liquid will flow down along the wall surface to the bottom and accumulates at the bottom. This liquid is discharged to the outside through a drain pipe 5 opening at the side portion of the bottom of the cylindrical body 3.

On the other hand, gas rises while circling within the annular circling flow path 6, and it is introduced into the gas discharge pipe 4 and discharged to the outside. The rising velocity of the gas flow in this annular circling flow path 6 has a remarkable characteristic that it is fast at the central portion and slow at the peripheral portion.

The flow on the outside of the nozzle 2 ($W_{11}$ in Fig. 11) among the gas-liquid two-phase flow having flowed from the inflow nozzle 2 of the vertical type cylindrical gas-liquid separator into the annular circling flow path 6, smoothly flows into the annular circling flow path while flowing along the peripheral wall of the cylindrical body 3, and liquid drops in the flow at the central portion ($W_{12}$) also advance straightly within the annular circling flow path and collide against and adhere to the peripheral wall of the cylindrical body, and they are separated. In this case, a part of the liquid drops in the flow at the central portion ($W_{12}$) would rescatter into the annular circling flow path 6 (for instance, in the illustrated direction $W_{22}$) after collision against the peripheral wall of the cylindrical body.

However, liquid drops in the flow on the inside of the nozzle ($W_{13}$) would pass through the central portion of the cylindrical body where a rising flow velocity of steam is fast when they have spouted into the annular circling flow path, or they would spread further and would scatter in the direction $W_{14}$ towards the central portion of the cylindrical body, then they would collide against the outer cylindrical wall or the inner cylindrical wall, and while a part of the liquid drops would adhere to these wall surfaces, the remaining part of the liquid drops would rescatter into the space of the annular circling flow path again after the collision.

Here, the flow of liquid drops spouting from the inflow nozzle into the cylindrical body would become a free jet flow corresponding to the cross-section configuration of the nozzle, and after having spouted into the cylindrical body 3, the flow would spread and slow down.

And the extent of this jet flow would spread and slow down to a one-side spreading angle ($\alpha$) of about 16 degrees in the case of a jet flow (two-dimensional jet flow) from a rectangular nozzle, and to a one-side spreading angle ($\alpha$) of about 12 degrees in the case of a jet flow from a circular nozzle.

As described above, the liquid drops in the jet flow on the inside of the nozzle would spread and scatter through (or towards) the central portion of the cylindrical body where a rising velocity of steam is fast, after having spouted into the cylindrical body, and even if they collide against the outer cylindrical wall (or the inner cylindrical wall), partly because of the fact that a collision angle $\beta$ of the wall surface is relatively large, while a part of the liquid drops would adhere to these wall surfaces, the remaining liquid drops would become numberless small liquid drops and rescatter (for instance, in the illustrated directions $W_{13}$, $W_{14}$, $W_{18}$, $W_{23}$, $W_{24}$ and $W_{28}$) after a considerable amount of the liquid drops have strongly collided against the wall surfaces. These scattered and rescattered numberless liquid drops having minute diameters would float up through the annular circling flow path towards the discharge port of the inner cylinder, and would be carried by a rising gas flow, and accordingly, this becomes a principal cause of remarkable degradation of a gas-liquid separation efficiency.

SUMMARY OF THE INVENTION:

The present invention intends to prevent collision against a gas discharge pipe and rescattering of liquid drops in a gas-liquid two-phase jet flow having flowed from an inflow nozzle into an annular circling flow path of a gas-liquid separator. Furthermore, it intends to provide means for smoothly producing a circling flow in an annular circling flow path without being disturbed by an incoming jet flow and also maintaining a collision angle of liquid drops in the incoming jet flow with respect to the peripheral wall of the outer cylinder small, so that most of the liquid drops may smoothly collide against and adhere to the peripheral wall of the outer cylinder, after the collision rescattering of liquid drops may be almost suppressed and in this way a separation efficiency of liquid drops can be remarkably improved.

The present invention is characterized in that an inflow nozzle mounted to a cylindrical body along its tangential direction is disposed with its cross-section area maintained equal to an inlet pipe cross-section area or increased along the direction of the flow as extended or without being extended into the cylinder up to the proximity of the position of the center line, also the bottom surface of this inflow nozzle is inclined downwards in the range of an inclination angle of smaller than 30 degrees so as to be lowered along the direction of the flow, and the width of the nozzle is maintained equal or gradually narrowed along the direction of the flow so that at the spouting end the width may be narrower than the width of the annular circling flow path formed between the cylindrical body and the gas discharge pipe provided at its central portion.

In the case of an inflow nozzle having a nozzle width smaller than the width of the annular circling flow path, this nozzle is disposed either as extended up to, for instance, the proximity of the position of the center line or without being extended. And the length of the inclined portion of the bottom surface of this inflow nozzle including the portion of the inflow nozzle outside of the cylinder is chosen to be equal to or larger than about three times the diameter of the same inlet pipe.

And, the inclination angle smaller than 30° of the bottom surface of the inflow nozzle is preferably chosen to be 10 - 15 degrees.

According to the present invention, owing to the provision of the above-described inflow nozzle which is disposed as extended or without being extended into the cylindrical body of the separator main body, a gas-liquid two-phase flow flowing into an annular circling flow path is directed towards the peripheral wall of the cylindrical body or towards the bottom of the cylindrical body, hence collision against the gas discharge pipe is eliminated, a circling flow in the annular circling flow path becomes a smooth flow without being disturbed by an incoming jet flow, and also, since angles of collision of liquid drops against the peripheral wall of the cylindrical body can be more appropriately maintained at a small value, most of the liquid drops are made to collide against and adhere to the peripheral wall of the cylindrical body, rescattering of liquid drops after collision is almost prevented, flowing down of the liquid drops to the bottom is promoted, and in this way, a gas-liquid separator having a gas-liquid separation efficiency remarkably improved, can be realized.

The above-mentioned and other objects, features and advantages of the present invention will become more apparent by reference to the following description of a number of preferred embodiments of the invention taken in conjunction with the accompanying drawings.

BRIEF DESCRIPTION OF THE DRAWINGS:

In the accompanying drawings:

Fig. 1 is a horizontal cross-section view of a gas-liquid separator according to a first preferred embodiment of the present invention taken along line C-C in Fig. 2 as viewed in the direction of arrows;

Fig. 2 is a vertical cross-section view of the same gas-liquid separator according to the first preferred embodiment of the present invention taken along line A-A in Fig. 1 as viewed in the direction of arrows, in a part of which is also shown a cross-section taken along line B-B in Fig. 1;

Fig. 3 is a horizontal cross-section view of a gas-liquid separator according to a second preferred embodiment of the present invention taken along line $C_1$-$C_1$ in Fig. 4 as viewed in the direction of arrows;

Fig. 4 is a vertical cross-section view of the same gas-liquid separator according to the second preferred embodiment of the present invention taken along line $A_1$-$A_1$ in Fig. 3 as viewed in the direction of arrows, in a part of which is also shown a cross-section taken along line $B_1$-$B_1$ in Fig. 3;

Fig. 5 is a horizontal cross-section view of a gas-liquid separator according to a third preferred embodiment of the present invention taken along line $C_2$-$C_2$ in Fig. 6 as viewed in the direction of arrows;

Fig. 6 is a vertical cross-section view of the same gas-liquid separator according to the third preferred embodiment of the present invention taken along line $A_2$-$A_2$ in Fig. 5 as viewed in the direction of arrows, in a part of which is also shown a cross-section taken along line $B_2$-$B_2$ in Fig. 5;

Fig. 7 is a horizontal cross-section view of a gas-liquid separator according to a fourth preferred embodiment of the present invention taken along line $C_3$-$C_3$ in Fig. 8 as viewed in the direction of arrows;

Fig. 8 is a vertical cross-section view of the same gas-liquid separator according to the fourth preferred embodiment of the present invention taken along line $A_3$-$A_3$ in Fig. 7 as viewed in the direction of arrows, in a part of which is also shown a cross-section taken along line $B_3$-$B_3$ in Fig. 7;

Fig. 9 is a horizontal cross-section view of a gas-liquid separator according to a fifth preferred embodiment of the present invention taken along line $C_4$-$C_4$ in Fig. 10 as viewed in the direction of arrows;

Fig. 10 is a vertical cross-section view of the same gas-liquid separator according to the fifth preferred embodiment of the present invention taken along line $A_4$-$A_4$ in Fig. 9 as viewed in the direction of arrows, in a part of which is also shown a cross-section taken along line $B_4$-$B_4$ in Fig. 9;

Fig. 11 is a horizontal cross-section view of a gas-liquid separator in the prior art taken along line $C_5$-$C_5$ in Fig. 12 as viewed in the direction of arrows; and

Fig. 12 is a vertical cross-section view of the same gas-liquid separator in the prior art taken along line $A_5$-$A_5$ in Fig. 11 as viewed in the direction of arrows, in a part of which is also shown a cross-section taken along line $B_5$-$B_5$ in Fig. 11.

DESCRIPTION OF THE PREFERRED EMBODIMENTS:

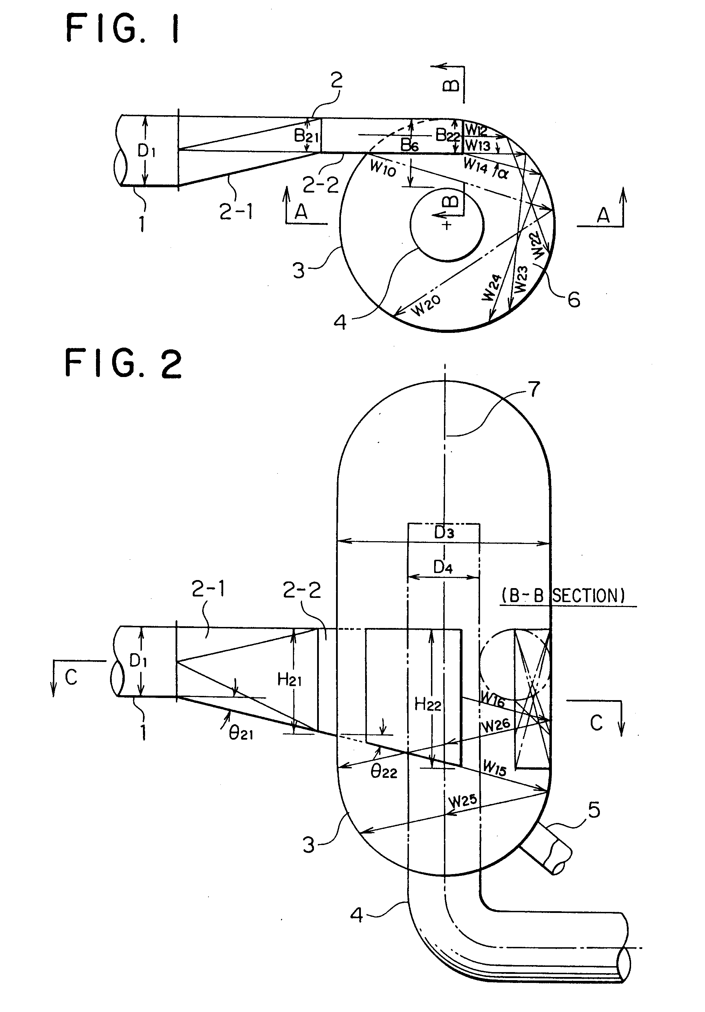

Now, description will be made on a cylinder-shaped vertical type gas-liquid separator according to a first preferred embodiment (in the case of a rectangular nozzle) of the present invention with reference to Figs. 1 and 2.

In these figures, reference numeral 3 designates a cylindrical body of a vertical type separator main body, numeral 1 designates an inlet pipe, numeral 2-1 designates a connection nozzle forming a compromised joint for connecting the inlet pipe 1 with a rectangular nozzle 2-2 having an extension into the cylindrical body 3, an inflow nozzle 2 is formed of the connection nozzle 2-1 and the rectangular nozzle 2-2, and this inflow nozzle 2 is mounted to the cylindrical body 3 along its tangential direction. The connection nozzle 2-1 is constructed in such manner that as shown in Fig. 1 its width may be linearly reduced towards the rectangular nozzle 2-2 as viewed from the above, and as shown in Fig. 2 its bottom surface may be inclined downwards towards the rectangular nozzle 2-2 as viewed horizontally. It is to be noted that the cross-section configuration of the rectangular nozzle 2-2 can be chosen to be a quadrilateral such as a trapezoidal cross-section or the like.

Reference numeral 4 designates a gas outlet pipe extending from the below of the cylindrical body 3 into the cylindrical body 3 coaxially therewith, numeral 5 designates a liquid discharge pipe provided at the side portion of the bottom of the cylindrical body 3, and numeral 6 designates an annular circling flow path formed between the gas outlet pipe 4 and the inside wall surface of the cylindrical body 3. Reference numeral 7 denotes a center line of the cylindrical body. Reference character D denotes a diameter, character B denotes a width, character H denotes a height, and suffixes appended to these characters represent the reference numerals of the corresponding component parts. That is, symbols $B_{21}$ and $H_{21}$ represent a width and a height of an outlet portion of the connection nozzle 2-1, symbols $B_{22}$ and $H_{22}$ represent a width and a height of an outlet portion of the rectangular nozzle 2-2, symbols $W_{12}$, $W_{13}$, $W_{15}$ and $W_{16}$ represent directions of principal flows of liquid drops in two-phase jet flows flowing in from the respective illustrated positions, symbol $W_{14}$ represents the spreaded flow direction of liquid drops, symbols $W_{22}$ - $W_{26}$ represent directions of principal rebounding and scattering of liquid drops when it is assumed that liquid drops have collided against the peripheral wall of the cylindrical body would rescatter, symbol $\theta$ represents an inclination angle of the bottom surface, and symbol a represents a spread angle of liquid drops in the jet flow.

However, it is to be noted that symbols $W_{10}$ and $W_{20}$ in these figures represent the flow direction of spreading liquid drops in a two-phase jet flow and the principal rebounding direction of rescattering liquid drops when the spreading liquid drops have collided against the peripheral wall of the cylindrical body, in the case of a separator provided with an inflow nozzle not having an extension within the cylindrical body, and they are depicted for the purpose of comparison with the flow direction $W_{14}$ and the rescattering direction $W_{24}$ in the same figures representing the preferred embodiment of the present invention.

In the above-described inflow nozzle 2, the inside wall surface of the connection nozzle 2-1 is inclined outwards so that the outlet width ($B_{21}$) of the nozzle may become about one-half of the width ($B_6$) of the annular circling flow path 6 ($B_{21} \fallingdotseq 1/2$ $B_6$), also the bottom surface of the connection nozzle 2-1 is inclined downwards while maintaining the height of the nozzle ($H_{21}$) so that the area of the outlet of the nozzle may not become smaller than the cross-section area of the inlet pipe 1, and further, the bottom surface of the rectangular nozzle 2-2 having an inside duct extending into the cylindrical body 3 is inclined downwards in such manner that its cross-section area may not be decreased along the direction of the flow. In addition, an outlet width $B_{22}$ of the above-described rectangular nozzle 2-2 is made equal to the outlet width $B_{21}$ of the connection nozzle 2-1, and an outlet area of the rectangular nozzle 2-2 is made larger than the outlet area of the connection nozzle 2-1.

In this preferred embodiment, with regard to the gas-liquid two-phase flow flowing from the inlet pipe 1 through the inflow nozzle 2, that is, through the connection nozzle 2-1 and the rectangular nozzle 2-2 into the annular circling flow path 6 within the separator, its flow direction is directed towards the outer peripheral wall and the bottom of the cylindrical body 3, a flow colliding against the gas outlet pipe at the center of the cylindrical body or a flow close to that flow would disappear, also the circling flow within the annular circling flow path 6 is rectified by the extension duct inside of the cylinder body of the rectangular nozzle 2-2 provided in extension within the cylindrical body, and owing to the facts that a smooth circling flow not having a disturbance is maintained and that the collision angle of this desirable circling flow and the jet flow with respect to the outer peripheral wall of the cylindrical body becomes smaller and preferable, rescattering of liquid drops after collision of the jet flow against the peripheral wall would almost disappear. In this way, most of the liquid drops would collide against and adhere to the peripheral wall, and the floating liquid drops which scattered or rescattered into the annular circling flow path then floated up as carried by a rising gas flow and were conveyed through the gas outlet pipe in the heretofore known separator, are almost eliminated, and a gas-liquid separation efficiency is greatly improved.

In this preferred embodiment, the angle of downward mounting (inclination angle) $\theta$ of the bottom surface of the inflow nozzle 2 (that is, the connection nozzle 2-1 and the rectangular nozzle 2-2) with respect to the horizontal plane is set at 30° or less.

By doing so, the rising flow along the wall surface of the gas-liquid two-phase flow which has flowed into the cylindrical body 3 and collided against the inner peripheral wall of the cylindrical body, can be mitigated, especially the effect is revealed in mitigation of the rising height of scattering mist, hence accompaniment of liquid particles with a rising gas flow is reduced, and a separation efficiency is improved.

Now describing about the influence of this inclination angle $\theta$ upon this improvement, as the angle $\theta$ is increased, the separation efficiency would become better, but it becomes best for the angle $\theta$ of about 10 to 15 degrees, if the angle $\theta$ increases further, the effect would decrease gradually, and if the angle $\theta$ exceeds 30 degrees, an opposite effect would be brought about. In the region of the angle $\theta$ exceeding 30°, a part of the two-phase flow having flowed from the inflow nozzle 2 into the cylindrical body would collide against the surface of liquid accumulated in the bottom region of the cylindrical body, resulting in that scattering of liquid drops from the liquid surface is induced. It is to be noted that the effect is remarkable even if the angle $\theta$ becomes slightly larger than $\theta = 0°$. This is caused by the fact that a liquid film flow flowing mostly along the bottom surface of the inflow nozzle becomes easy to flow owing to the inclination of the bottom surface, and entrainment by the gas flow from the surface of the liquid film flow is abruptly decreased.

The length $\ell$ of the inflow nozzle 2 (that is, the length from the inlet of the connection nozzle 2-1 up to the outlet of the rectangular nozzle 2-2 provided as extended into the cylindrical body) is preferably about three times the inner diameter of the inlet pipe 1 or more.

This length corresponds to a run-up distance necessary for the inside flow to be directed in the direction of a bending angle $(\theta)$ at the outlet of the inflow nozzle 2 (the inflow end of the cylindrical body) in the case where the inflow nozzle 2 is bent (by the angle $\theta$) with respect to the horizontal plane. More particularly, this is because in general if a piping is bent, the flow therein would deviate towards the outside of the bent portion, but as it flows down, the flow is gradually rectified into a uniform distribution, and especially in a gas-liquid two-phase flow, the distance in which the liquid film flow returns to the inside of the bend (the bottom surface side of the inflow nozzle in the illustrated embodiment) amounts to about three times the diameter of the pipe.

In the above-described first preferred embodiment, in the inflow nozzle 2, the inside wall surface of the connection nozzle 2-1 is inclined to the outside so that its outlet width $(B_{12})$ may become about one-half of the width $(B_6)$ of the annular circling flow path 6 $(B_{12} \fallingdotseq 1/2 \, B_6)$ and its bottom surface is inclined downwards while maintaining its nozzle height $(H_{21})$ so that the area of the connection nozzle 2-1 may not become smaller than the cross-section area of the inlet pipe 1, and further the rectangular nozzle 2-2 having an inside duct extending into the cylindrical body 3 of the separator main body is provided with its bottom surface inclined downwards so that its cross-section area may not be decreased along the direction of flow, thereby liquid drops are made to almost perfectly collide against and adhere to the outer peripheral wall of the cylinder-shaped cylindrical body 3, the circling flow in the annular circling flow path 6 is produced smoothly without disturbance, and a gas-liquid separation efficiency is remarkably improved. In addition, in this preferred embodiment, owing to the fact that especially the outlet width ($B_{22}$) of the rectangular nozzle 2-2 and the outlet width ($B_{21}$) of the connection nozzle 2-1 are made to be equal widths, the bottom surface inclination ($\theta_{22}$) of the rectangular nozzle 2-2 are held to be the same angle as the bottom surface inclination ($\theta_{21}$) of the connection nozzle 2-1, and thereby the outlet area of the rectangular nozzle 2-2 is made larger than the outlet area of the connection nozzle 2-1 (accordingly, larger than the cross-section area of the inlet pipe), a static pressure loss of the inflow nozzle can be made small at the same time. In this way, double effects of improving a separation efficiency and recovering a static pressure loss can be revealed.

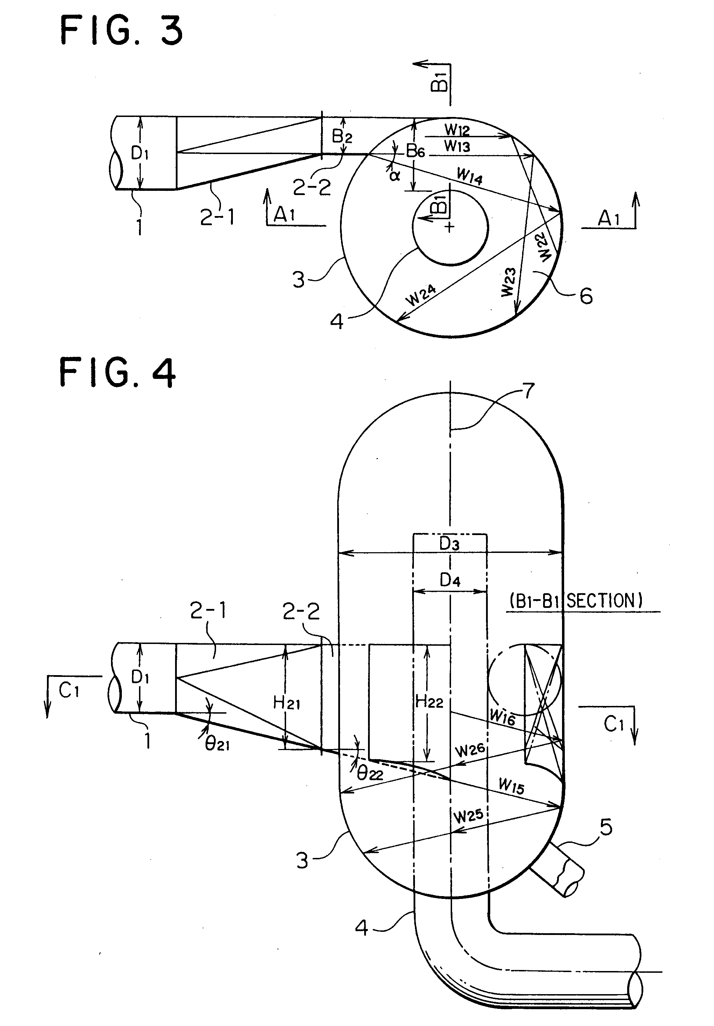

Next, a cylinder-shaped vertical type gas-liquid separator according to a second preferred embodiment (in the case of a rectangular nozzle) of the present invention will be described with reference to Figs. 3 and 4, respectively, showing a horizontal cross-section view and a vertical cross-section view of the gas-liquid separator.

Reference numerals appearing in these figures designate members similar to those provided in the first preferred embodiment and given like reference numerals, and comparing this second preferred embodiment with the above-described first preferred embodiment, they are somewhat different in the arrangement, configuration and sizes of the inflow nozzle.

More particularly, in this second preferred embodiment, in the inflow nozzle 2, the inside wall surface is inclined so that the outlet width ($B_2$) of the connection nozzle 2-1 may become equal to about one-half of the width ($B_6$) of the annular circling flow path 6 ($B_2 \fallingdotseq 1/2\ B_6$), and its bottom surface is inclined downwards (at an angle $\theta_{21}$) while maintaining a nozzle height ($H_{21}$) so that the outlet area of the connection nozzle may not become smaller than the cross-section area of the inlet pipe 1 (up to this point, the condition is the same as the first preferred embodiment). Furthermore, the rectangular nozzle 2-2 provided within the cylindrical body 3 of the separator main body without being extended, is designed in such manner that it has the same bottom surface inclination ($\theta_{22}$) as the bottom surface inclination ($\theta_{21}$) of the connection nozzle 2-1 ($\theta_{22} = \theta_{21}$) so that its cross-section area may not be decreased along the direction of flow and the outlet width of the rectangular nozzle 2-2 may be equal to the outlet width of the connection nozzle 2-1.

In essence, the second preferred embodiment is different in that the structure is more simplified than the first preferred embodiment and a short rectangular nozzle 2-2 not extending into the cylindrical body is provided. In addition, the length of the inflow nozzle 2 (that is, the total length of the connection nozzle 2-1 and the rectangular nozzle 2-2, or in the case where the above-mentioned members 2-1 and 2-2 are integrated and integrally form an inflow nozzle, the length of the integral inflow nozzle) is chosen at a desirable length with respect to the diameter of the inlet pipe 1 (a length of about 3 times or more of the inlet pipe diameter) similarly to the first preferred embodiment.

According to this second preferred embodiment, a high separation efficiency can be obtained with a simpler construction at a relatively low cost. More particularly, although liquid drops spreading from the spouting end are somewhat increased by the about corresponding to the lack of the inside duct extending into the cylindrical body 3 of the separator main body, the spreading liquid drops would not collide against the inner cylinder wall of the cylindrical body 3. And, since the collision angle of the main jet flow against the outer peripheral wall is held small, with regard to its performance and effect as compared to the separator in the prior art, a separation efficiency can be still improved remarkably.

It is to be noted that the effect of reducing a static pressure loss by means of the inside duct, which was an advantage of the first preferred embodiment, cannot be expected from this second preferred embodiment.

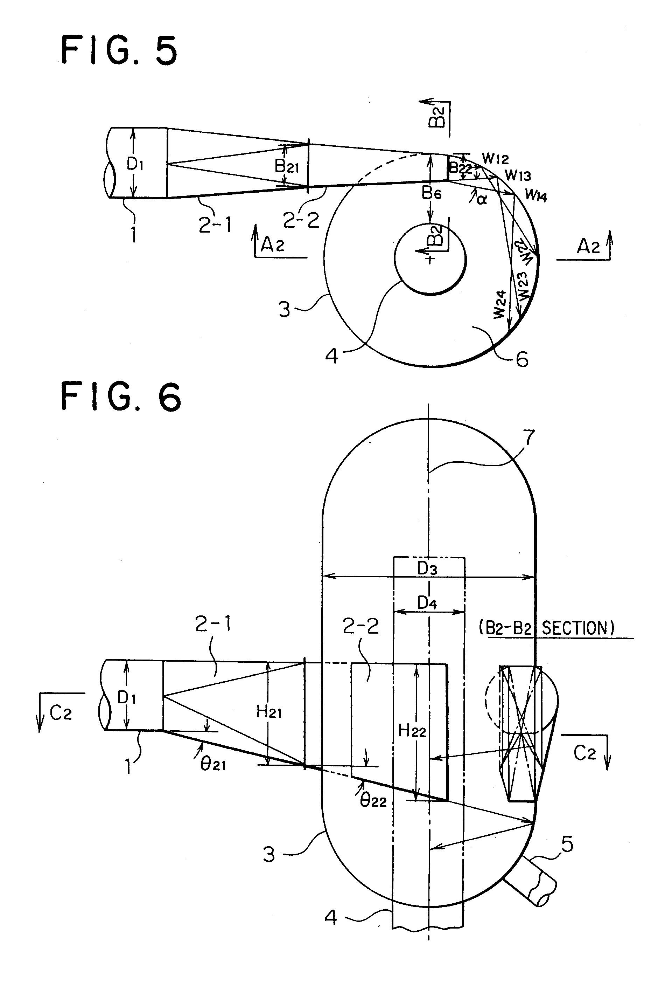

A cylinder-shaped vertical type gas-liquid separator according to a third preferred embodiment (in the case of a rectangular nozzle) of the present invention will be described with reference to Figs. 5 and 6, respectively, showing a horizontal cross-section view and a vertical cross-section view of the gas-liquid separator.

Reference numerals appearing in these figures designate members similar to those provided in the first preferred embodiment and given like reference numerals, and comparing the third preferred embodiment with the first preferred embodiment, they are somewhat different in the arrangement, configuration and sizes of the inflow nozzle.

More particularly, in this third preferred embodiment, in the inflow nozzle 2, the side wall surface distance is narrowed so that the outlet width ($B_{21}$) of the connection nozzle 2-1 may become equal to about one-half of the width ($B_6$) of the annular circling flow path 6 ($B_2 \fallingdotseq 1/2\ B_6$), and is bottom surface is inclined downwards while maintaining a nozzle height ($H_{21}$) so that the outlet area of the connection nozzle may not become smaller than the cross-section area of the inlet pipe 1 (up to this point, the condition is the same as the first preferred embodiment). With regard to the method of narrowing the side wall surface distance, the distance is narrowed by equally tapering both the inside and outside wall surfaces. Furthermore, the rectangular (inflow) nozzle 2-2 provided as extended into the cylindrical body 3 of the separator main body has the same bottom surface inclination ($\theta_{22}$) as the bottom surface inclination ($\theta_{21}$) of the connection nozzle 2-1, and in order to make the outlet cross-section area of the rectangular nozzle 2-2 equal to the outlet cross-section area of the connection nozzle 2-1, the outlet width ($B_{22}$) of the rectangular nozzle 2-2 is made narrower than the outlet width ($B_{21}$) of the connection nozzle 2-1.

In essence, this third preferred embodiment is different from the preceding preferred embodiments in that the configuration of the connection nozzle is made symmetrical for the left side and the right side, and that the configuration of the rectangular nozzle 2-2 provided as extended into the cylindrical body 3 of the separator main body is such that its outlet cross-section area (that is, a cross-section area of a spouting port) is made equal to the cross-section area of the inlet pipe 1 and the width of its tip end is narrowed. In addition, the length of the inflow nozzle 2 (that is, the total length of the connection nozzle 2-1 and the rectangular nozzle 2-2) is chosen at a desirable length relative to the diameter of the inlet pipe 1 (a length of about three times or more of the inlet pipe diameter), similarly to the first preferred embodiment.

A difference of this third preferred embodiment from the first preferred embodiment resides in the difference in the configuration and sizes of the rectangular nozzle 2-2. That is, according to this preferred embodiment, in order to obtain a further high separation efficiency as compared to the first preferred embodiment, while the cross-section area of the rectangular nozzle 2-2 is held equal to the cross-section area of the inlet pipe 1 and equal to the cross-section area of the connection nozzle 2-1, it is provided as extended into the cylindrical body of the cylindrical body 3, and the outlet width ($B_{22}$) of the rectangular nozzle 2-2 is further narrowed. The effect of such modification is that scattering and rescattering of liquid drops as well as floating of liquid drops caused thereby are nearly perfectly eliminated, and a separation efficiency is remarkably improved. However, as a sacrifice, reduction of a static pressure loss, which was an advantage of the first preferred embodiment, cannot be expected from this third preferred embodiment.

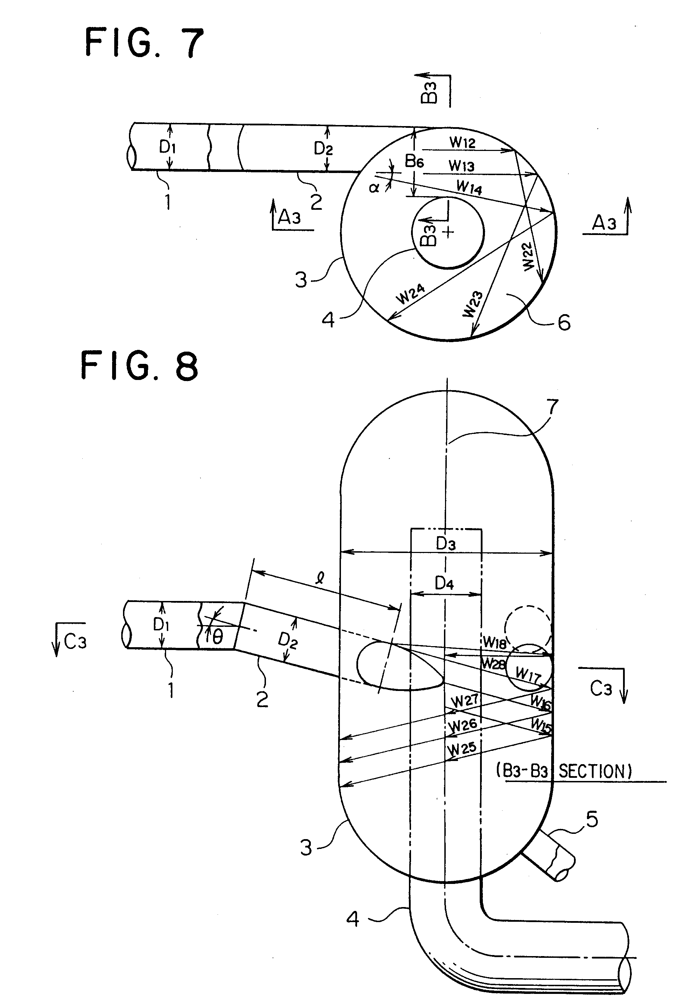

Next, description will be made on a cylinder-shaped vertical type gas-liquid separator according to a fourth preferred embodiment (in the case of a circular nozzle) of the present invention with reference to Figs. 7 and 8, respectively, showing a horizontal cross-section view and a vertical cross-section view. In these figures, reference numeral 3 designates a cylindrical body of a cylinder-shaped separator main body, and numeral 2 designates an inflow nozzle provided as extended into the cylinder of the cylindrical body 3 along a tangential line to the side surface of the cylindrical body 3. The inflow nozzle 2 is a circular nozzle (or it could have an elliptic cross-section) having a diameter smaller than the width of an annular circling flow path, which is extended into the cylinder of the cylindrical body 3 up to the proximity of the center line position, and has a straight portion of $\ell$ in total length including a section outside of the cylinder and a section inside of the cylinder, and this straight portion is provided as inclined by an angle $\theta$ with respect to the horizontal plane so as to be lowered along the direction of flow. Here, reference numeral 1 designates an inlet pipe, numeral 4 designates a gas outlet pipe extending upwards within the cylindrical body 3 coaxially therewith, numeral 5 designates a liquid discharge pipe provided at the side portion of the bottom of the cylindrical body 3, numeral 6 designates an annular circling flow path, and numeral 7 designates a center line of the separator. Reference symbol D designates a diameter, and arrows W indicate directions of flow, among which arrows ($W_{11}$ - $W_{13}$ and $W_{15}$ - $W_{17}$) respectively denote principal spouting directions from the illustrated spouting positions, and arrows ($W_{14}$, $W_{18}$) denote spreaded spouting directions (spreading angle $\alpha$) of the jet flow. In additions, arrows ($W_{22}$ - $W_{24}$ and $W_{25}$ - $W_{28}$) typically illustrate principal bounding directions in the case where liquid drops are assumed to bound and rescatter after collision against the peripheral wall.

In such cylinder-shaped vertical type gas-liquid separator, the gas-liquid two-phase fluid flows from the inflow nozzle 2 provided as extended into the cylinder of the cylindrical body 3 into the cylindrical body 3, and while advancing straightly in the axial direction of the inflow nozzle, it circles as descending along the inner peripheral wall of the cylindrical body 3. Then the liquid is separated and adheres to the inner peripheral wall of the cylindrical body, and due to the action of a gas flow and the gravity, it descends along the wall surface, and is discharged to the outside through the liquid discharge pipe 5 provided at the bottom of the cylindrical body.

On the other hand, the gas rises while circling within the cylindrical body, and is taken out through the gas outlet pipe 4.

In this case, a main flow of liquid drops in the gas-liquid two-phase jet flow introduced into the cylindrical body 3 by the inflow nozzle 2 provided as extended into the cylindrical body 3, would advance straightly in the axial direction of the inflow nozzle along the inner peripheral wall of the cylindrical body 3 as indicated by arrowed flow lines $W_{11}$ - $W_{13}$ and $W_{15}$ - $W_{17}$, for instance, even if it flows in from the proximity of the nozzle wall at an angle $\alpha$ (approximately at a spreading angle of about 12 degrees) as shown by a flow line $W_{14}$, it would not collide against the inner cylinder 4, and also since the main flow of liquid drops descend along the bottom surface of the nozzle in the axial direction of the inflow nozzle (for instance, as shown by a flow line $W_{18}$), even though there is a liquid drop flow spreading at an angle $\alpha$ - (approximately at a spreading angle of about 12 degrees) from the proximity of the top surface of the nozzle end, upward jumping of liquid drops caused by collision against the inner wall surface of the cylindrical body 3 becomes low and scarce, and floating liquid drops accompanying the rising gas flow flowing towards the gas outlet pipe 4 would be almost eliminated.

In addition, descending (flowing down) of the liquid drops carried to the inner wall surface of the cylindrical body is assisted by the downward flow (a bottom surface inclination angle $\theta$) at the time of flowing in, hence, nothing to say about prevention of rescattering of liquid drops, but also it effectively acts upon flowing down of the liquid, and a gas-liquid separation efficiency is improved.

In this preferred embodiment also, the downward mounting angle $\theta$ of the inflow nozzle 2 with respect to the horizontal plane is set at 30 degrees or less, and if this is chosen at about 10 to 15 degrees, the best results would be obtained.

Next, the length $\ell$ of the inclined straight portion of the inflow nozzle 2 is also preferably chosen at about three times or more of the inner diameter of the inlet pipe 1 (that is, the inner diameter of the inflow nozzle) from the reasons described previously in connection to the first preferred embodiment.

According to the above-described fourth preferred embodiment of the present invention, in a gas-liquid separator, in which the inlet pipe 1 is mounted along the tangential direction of a side surface of a vertical type cylindrical body 3, liquid separated and collected on an inner wall surface of the cylindrical body 3 forming an outside peripheral wall of an annular circling flow path, would be scarcely scattered or rescattered into floating liquid drops and would scarcely accompany the rising gas flow as is the case with the prior art, and hence a gas-liquid separation efficiency is improved.

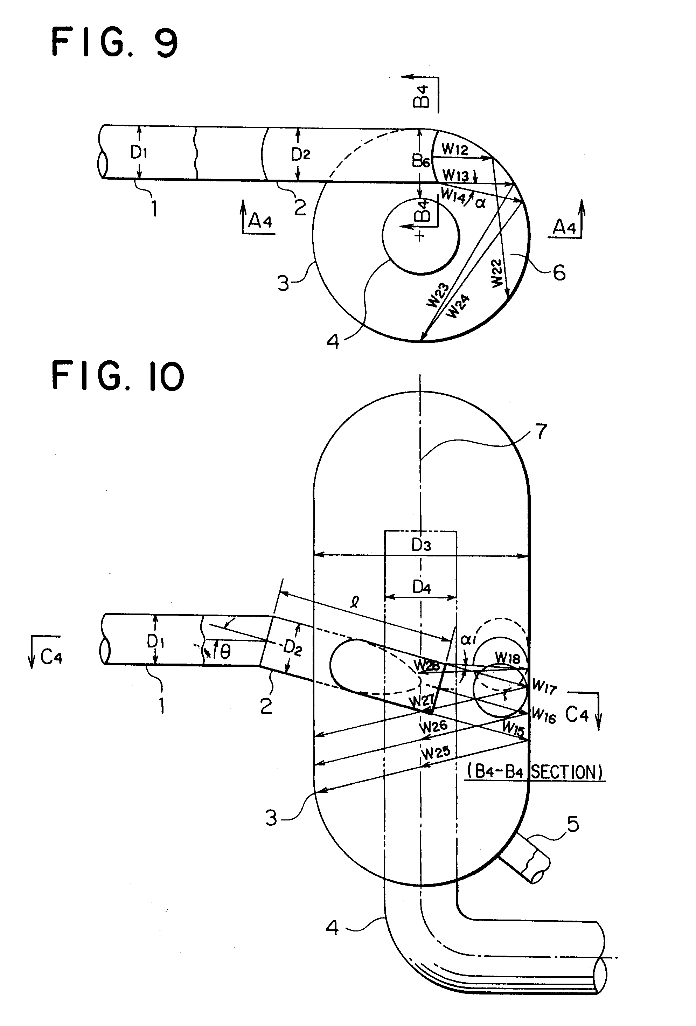

Now a cylinder-shaped vertical type gas-liquid separator according to a fifth preferred embodiment (in the case of a circular nozzle) of the present invention will be described with reference to Figs. 9 and 10, respectively, showing a horizontal cross-section view and a vertical cross-section view.

Reference numerals appearing in these figures denote the same ones as in the above-described fourth preferred embodiment, and comparing this embodiment with the fourth preferred embodiment, some differences are present therebetween in the arrangement, configuration and sizes of the inflow nozzle.

More particularly, this preferred embodiment is different from the fourth preferred embodiment in that the construction is simplified as compared to the fourth preferred embodiment in that while a circular inlet nozzle inclined downwards is provided, it does not extend into the cylindrical body 3.

In this preferred embodiment also, the downwardly directed mounting angle of the inflow nozzle with respect to the horizontal plane is chosen at a desirable angle (30 degrees or less), and the length of the inclined portion is chosen at a desirable length (a length equal to three times or more of the inlet pipe diameter) similarly to the fourth preferred embodiment.

This fifth preferred embodiment also can obtain a high separation efficiency with a simplified construction at a relatively low cost. More particularly, although spreading liquid drops from the spouting end are increased by the amount corresponding to the lack of the extension duct into the cylindrical body 3, it would never occur that the spreading liquid drops collide against the inner cylinder wall.

Here it is to be noted that in this fifth preferred embodiment in order that the spreading liquid drops may not collide against the inner cylinder wall, it is necessary that either the inflow nozzle diameter (accordingly, the inlet pipe diameter) should be relatively small or the width of the annular circling flow path 6 (hence the inner diameter of the separator main body) should be relatively large as compared to the fourth preferred embodiment, and in such case this preferred embodiment is applicable.

And, since the collision angle of the main jet flow against the outer peripheral is maintained small, comparing the performance and the effects of the embodiment with the heretofore known gas-liquid separators, a separation efficiency is still improved.

As described in detail above in connection to a number of preferred embodiments, according to the present invention, the gas-liquid two-phase flow flowing into the cylindrical body through the inflow nozzle is directed towards the peripheral wall of the cylindrical body and the bottom of the cylindrical body, hence collision against the gas discharge pipe would not occur, and also, the circling flow in the annular circling flow path would not be disturbed by the incoming jet flow. Moreover, the collision angle of the liquid drops against the peripheral wall of the cylindrical body can be maintained at an appropriately small value. Accordingly, most liquid drops are made to collide against and adhere to the peripheral wall of the cylindrical body, thereby rescattering of liquid drops after collision is prevented, and flowing down of the liquid drops to the bottom is promoted. In this way, according to the present invention, a gas-liquid separation efficiency can be remarkably improved.

While a principle of the present invention has been described above in connection to a number of preferred embodiments, it is intended that all matter contained in the above description and illustrated in the accompanying drawings shall be interpreted to be illustrative and not as a limitation to the scope of the invention.

**Claims**

1. A gas-liquid separator characterized in that an inflow nozzle having a particular shape is formed and is mounted to a cylindrical body along its tangential direction, the cross-section area of said inflow nozzle is not decreased from its inlet along the inflow direction of a two-phase flow, the bottom surface of said inflow nozzle is inclined so as to be lowered along the flow direction at an inclination angle in the range of 30 degrees or less, the width of said inflow nozzle is held equal or gradually narrowed along the flow direction of the two-phase flow, and the width at the spouting end of the inflow nozzle is narrower than the width of an annular circling flow path formed between said cylindrical body and a gas discharge pipe provided at the central portion of said cylindrical body.

2. A gas-liquid separator as claimed in Claim 1, characterized in that said inflow nozzle is extended into the cylindrical body.

3. A gas-liquid separator as claimed in Claim 1, characterized in that the inclination angle of the bottom surface of said inflow nozzle is chosen at 10° - 15°.

4. A gas-liquid separator as claimed in Claim 1, characterized in that the length of the inclined portion of the bottom surface of said inflow nozzle is chosen to be equal to about three times or more of an inlet pipe diameter.

5. A gas-liquid separator as claimed in Claim 2, characterized in that the inclination angle of the bottom surface of said inflow nozzle is chosen at 10° - 15°.

6. A gas-liquid separator as claimed in Claim 2, characterized in that the length of the inclined portion of the bottom surface of said inflow nozzle is chosen to be equal to about three times or more of an inlet pipe diameter.

7. A gas-liquid separator as claimed in Claim 1, characterized in that the inclination angle of the bottom surface of said inflow nozzle is chosen at 10° - 15°, and the length of the inclined portion of the bottom surface of said inflow nozzle is chosen to be equal to about three times or more of an inlet pipe diameter.

8. A gas-liquid separator as claimed in Claim 2, characterized in that the inclination angle of the bottom surface of said inflow nozzle is chosen at 10° - 15°, and the length of the inclined portion of the bottom surface of said inflow nozzle is chosen to be equal to about three times or more of an inlet pipe diameter.

# FIG. 1

# FIG. 2

10

# FIG. 3

# FIG. 4

(B₁–B₁ SECTION)

# FIG. 5

# FIG. 6

(B2-B2 SECTION)

# FIG. 7

# FIG. 8

(B3-B3 SECTION)

EP 0 475 252 A1

# FIG. 9

# FIG. 10

(B4-B4 SECTION)

# FIG. II (PRIOR ART)

# FIG. I2 (PRIOR ART)

(B5-B5 SECTION)

**European Patent Office**

## EUROPEAN SEARCH REPORT

Application Number

**EP 91 11 4857**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-343 057   (PAUL FRIEDLI) <br> * the whole document * * <br> – – – | 1,2,3,5 | F 22 B 37/32 <br> B 01 D 45/08 <br> B 01 D 45/12 |
| A | FR-A-617 192   (SOCIETE ANONYME BROWN, BOVERI & CIE.,) <br> – – – | | B 01 D 53/26 <br> B 04 C 5/04 <br> B 04 C 5/02 |
| A | DE-A-1 915 730   (BOURQUIN,R. ET AL.) <br> – – – | | B 04 C 5/081 |
| A | US-A-3 951 620   (R.W.FRISCHMUTH, JR.,) <br> – – – | | |
| A | EP-A-0 090 335   (LÖSEL, G.,) <br> – – – | | |
| A | US-A-3 349 548   (J.L.BOYEN) <br> – – – – – | | |

| TECHNICAL FIELDS SEARCHED (Int. Cl.5) |
|---|
| F 22 B <br> F 27 B <br> B 01 D <br> B 04 C |

The present search report has been drawn up for all claims

| Place of search | Date of completion of search | Examiner |
|---|---|---|
| The Hague | 11 November 91 | PYFFEROEN K. |